# EUROPEAN PATENT SPECIFICATION

(11) **EP 3 626 778 B1**
(45) Date of publication and mention of the grant of the patent: **23.08.2023**
(21) Application number: 19198363.4
(22) Date of filing: 19.09.2019
(51) Int. Cl.: C08L 51/04

(54) **ELECTRICALLY CONDUCTIVE RESIN COMPOSITION AND PREPARATION METHOD THEREOF**
ELEKTRISCH LEITFÄHIGE HARZZUSAMMENSETZUNG UND HERSTELLUNGSVERFAHREN DAFÜR
COMPOSITION DE RÉSINE ÉLECTROCONDUCTRICE ET SON PROCÉDÉ DE PRÉPARATION

(30) Priority: 19.09.2018 KR 20180111915
(43) Date of publication of application: 25.03.2020
(73) Proprietor: Korea Kumho Petrochemical Co., Ltd., Seoul 04542 (KR)
(72) Inventor: LEE, Wan Sung, 34048 Daejeon (KR); HWANG, Ho Soo, 34071 Daejeon (KR)
(74) Representative: M. Zardi & Co S.A.

(56) References cited:
- EP-A1- 3 486 281
- KR-A- 20180 015 501
- US-A1- 2017 287 584

## Description

### CROSS-REFERENCE TO RELATED APPLICATION

This application claims priority to and the benefit of Korean Patent Application No. 10-2018-0111915, filed on Sep 19, 2018.

### BACKGROUND

### 1. Field of the Invention

The present invention relates to an electrically conductive resin composition and a preparation method thereof, and more particularly, to: an electrically conductive resin composition, in which moldability, mechanical strength, and antistatic properties have been harmoniously improved; and a preparation method thereof.

### 2. Discussion of Related Art

A thermoplastic resin refers to a plastic polymer material that softens and shows plasticity when heated and solidifies when cooled. Since such thermoplastic resins have excellent processability and excellent moldability, they are widely applied to various products such as household products, office automation equipment, electrical and electronic products, automotive parts, and the like.

In addition, attempts have been made to use thermoplastic resins as a high valueadded material by imparting special properties to the same according to the types and characteristics of products to which the resins are to be applied.

In particular, when a thermoplastic resin is to be applied to an area in which the resin product is expected to rub against another resin product or other materials and thus be damaged or contaminated due to the generation of static electricity, there is a need to impart electrical conductivity (hereinafter, simply referred to as "conductivity") to the thermoplastic resin.

Conventionally, in order to impart conductivity to a conventional thermoplastic resin as such, conductive fillers such as carbon nanotubes, carbon black, graphite, carbon fibers, metal powder, metal-coated inorganic powder, or metal fibers have been used.

For example, US Patent Registration No. 4478903, Korean Patent Registration No. 10-0330200, and the like disclose a conductive composite material in which carbon black is mixed with a thermoplastic resin such as polystyrene or acrylonitrile butadiene styrene (ABS). However, in this case, due to the use of an excessive amount of carbon black, which is required to impart the required level of conductivity, the inherent mechanical properties of the thermoplastic resin, in particular, impact resistance, may not be sufficiently exhibited.

In addition, Korean Patent Registration No. 10-1204030 discloses a resin composition for a semiconductor chip tray, which contains polyphenylene ether at 50 wt% to 65 wt%, impact-resistant polystyrene at 10 wt% to 20 wt%, carbon nanotubes at 1 wt% to 3 wt%, and the like. Although the above-described resin composition is thermoplastic in nature and thus should have the ability to be freely molded into the shape of the final product, when it is molded into a product, the dispersion of the carbon nanotubes therein tends to become less uniform in bent portions, where high elongation is required, compared to in planar portions such that conductivity is significantly lowered or cracking occurs in the bent portions. Therefore, the resin composition is not easily applicable to products, parts, and the like which require sophisticated molding, and cannot provide the required level of impact resistance. US2017/287584 and KR20180015501 are examples of an electrically conductive resin

### SUMMARY OF THE INVENTION

The present invention has been designed to solve the above-described problems of the prior art, and is directed to providing: a conductive resin composition, in which moldability, mechanical strength, and antistatic properties have been harmoniously improved; and a preparation method thereof. The present invention provides a conductive resin composition, which contains: a first copolymer, which contains a rubber component having an average particle diameter of 1 µm to 5 µm, at 10 wt% to 35 wt%;
a second copolymer, which contains a rubber component having an average particle diameter of 1 µm to 3 µm, at 20 wt% to 40 wt%;
a third copolymer, which contains a rubber component having an average particle diameter of 5 µm to 7 µm, at 20 wt% to 40 wt%;
a conductive filler at 0.1 wt% to 10 wt%;
and an additive at 0 wt% to 10 wt%,
wherein said first, second and third copolymer is styrene-butadiene copolymer.

According to one exemplary embodiment, the conductive filler may be one selected from the group consisting of a carbon nanotube, a fullerene, graphene, graphite, a carbon fiber, carbon black, and a mixture of two or more thereof.

According to one exemplary embodiment, the additive may be one selected from the group consisting of a metal salt, stearamide, a silicone oil, and a mixture thereof.

According to one exemplary embodiment, the metal salt may be one selected from the group consisting of calcium stearate, barium stearate, lead stearate, magnesium stearate, zinc stearate, and a mixture of two or more thereof.

According to one exemplary embodiment, the silicone oil may have a kinematic viscosity of 1 cSt to 10 cSt at 25 °C.

The second copolymer and the third copolymer may be mixed in a weight ratio of 1 to 2:1 to 2.

According to one exemplary embodiment, a ratio of the rubber content of the second copolymer and the rubber content of the third copolymer may be 1:1 to 1.5.

In addition, in another aspect of the present invention, there is provided a method of preparing a conductive resin composition, which includes:
(a) preparing a masterbatch by kneading a composition containing a first copolymer and a conductive filler, wherein the first copolymer contains a rubber component having an average particle diameter of 1 µm to 5 µm; and
(b) kneading a composition containing the masterbatch, a second copolymer, and a third copolymer, wherein the second copolymer contains a rubber component having an average particle diameter of 1 µm to 3 µm, and the third copolymer contains a rubber component having an average particle diameter of 5 µm to 7 µm,

wherein said first, second and third copolymer is styrene-butadiene copolymers,
wherein the content of the first copolymer is 10 wt% to 35 wt%, wherein the content of the second copolymer is 20 wt% to 40 wt%, and wherein the content of the third copolymer is 20 wt% to 40 wt%.

According to one exemplary embodiment, the composition of the step (a) may further contain a metal salt and a silicone oil.According to one exemplary embodiment, the composition of the step (b) may further contain stearamide.

### DETAILED DESCRIPTION OF EXEMPLARY EMBODIMENTS

Hereinafter, the present invention will be described based on exemplary embodiments, but additional contents not described through the embodiments will also be supplemented.

Throughout this specification, when a part is mentioned as being "connected" to another part, this means that the part may not only be "directly connected" to the other part but may also be "indirectly connected" to the other part through another member interposed therebetween. In addition, when a part is mentioned as "including" a specific component, this does not preclude the possibility of the presence of other component(s) in the part but means that the part may further include the other component(s), unless otherwise stated.

When a numerical value is presented herein, the value has the precision of the significant digit provided in accordance with the standard rules in chemistry for significant digits unless its specific range is stated otherwise. For example, the numerical value 10 includes the range of 5.0 to 14.9 and the numerical value 10.0 includes the range of 9.50 to 10.49.

### Conductive resin composition

The conductive resin composition according to one aspect of the present invention comprises: a first copolymer, which contains a rubber component having an average particle diameter of 1 µm to 5 µm, at 10 wt% to 35 wt%; a second copolymer, which contains a rubber component having an average particle diameter of 1 µm to 3 µm, at 20 wt% to 40 wt%; a third copolymer, which contains a rubber component having an average particle diameter of 5 µm to 7 µm, at 20 wt% to 40 wt %; a conductive filler at 0.1 wt% to 10 wt%; and an additive at 0 wt% to 10 wt%, wherein said first, second and third copolymer is styrene-butadiene copolymer.

Here, the unit "wt%" is based on the total weight of the conductive resin composition.

The first copolymer, the second copolymer, and the third copolymer is a styrene-butadiene copolymer. As used herein, the term "styrene-butadiene copolymer" refers to typical high-impact polystyrene (HIPS) and may be interpreted as a rubber-modified styrene-based copolymer or rubber-modified polystyrene.

The average rubber particle diameter of the first copolymer is 1 µm to 5 µm, and butadiene, which is the rubber component, may be contained in an amount of 7.5 wt% to 9 wt% based on the total weight of the copolymer and have a melt index of 12 g/10 min to 14 g/10 min (at 200 °C, 5 kg), which indicates high fluidity.

The content of the first copolymer is 10 wt% to 35 wt% and preferably 20 wt% to 35 wt% based on the total weight of the conductive resin composition. In this case, the content of the first copolymer may be 10 wt% or more, 15 wt% or more, or 20 wt% or more, and 35 wt% or less based on the total weight of the conductive resin composition. When the content of the first copolymer is less than 10 wt%, since fluidity is lowered, moldability may be lowered. On the other hand, when the content of the first copolymer is more than 40 wt%, the mechanical properties of the molded article produced from the conductive resin composition may be adversely affected, or die build-up or surging may occur during molding.

The average rubber particle diameter of the second copolymer is 1 µm to 3 µm, and butadiene, which is the rubber component, may be contained in an amount of 6 wt% to 7.5 wt% based on the total weight of the copolymer. Since the second copolymer has relatively low rubber content and a relatively small average rubber particle diameter, a molded article containing the second copolymer can have excellent appearance characteristics.

The content of the second copolymer is 20 wt% to 40 wt% and preferably 25 wt% to 35 wt% based on the total weight of the conductive resin composition. In this case, the content of the second copolymer may be 20 wt% or more, 22.5 wt% or more, or 25 wt% or more, and 40 wt% or less, 37.5 wt% or less, or 35 wt% or less based on the total weight of the conductive resin composition. When the content of the second copolymer is less than 20 wt%, the appearance characteristics of the molded article may be adversely affected. On the other hand, when the content of the second copolymer is more than 40 wt%, the impact strength of the molded article may be lowered, or moldability may be lowered due to decreased elongation.

The average rubber particle diameter of the third copolymer is 5 µm to 7 µm, and butadiene, which is the rubber component, may be contained in an amount of 9 wt% to 10.5 wt% based on the total weight of the copolymer. Since the third copolymer has relatively high rubber content and a relatively large average rubber particle diameter, a molded article containing the third copolymer can have high impact resistance and excellent elongation.

The content of the third copolymer is 20 wt% to 40 wt% and preferably 25 wt% to 35 wt% based on the total weight of the conductive resin composition. In this case, the content of the third copolymer may be 20 wt% or more, 22.5 wt% or more, or 25 wt% or more, and 40 wt% or less, 37.5 wt% or less, or 35 wt% or less based on the total weight of the conductive resin composition. When the content of the third copolymer is less than 20 wt%, the elongation of the molded article may be lowered. On the other hand, when the content of the third copolymer is more than 40 wt%, the surface roughness of the molded article may be increased, or processability may be lowered due to decreased fluidity.

The conductive resin composition contains the conductive filler in an amount of 0.1 wt% to 10 wt% and preferably 1 wt% to 5 wt%. In this case, the content of the conductive filler may be 0.1 wt% or more, 0.5 wt% or more, or 1 wt% or more, and 10 wt% or less, 7.5 wt% or less, or 5 wt% or less based on the total weight of the conductive resin composition. When the conductive filler is used in an amount of less than 0.1 wt%, the effect of imparting conductivity to the resin or to the product may be insignificant. On the other hand, when the conductive filler is used in an amount of more than 10 wt%, as the relative contents of the first, second, and third copolymer components have been reduced or become imbalanced, the moldability of the resin composition and the mechanical properties of the molded article may be adversely affected. In addition, since the conductive filler may form an aggregate, the dispersibility thereof in the resin composition may be lowered, and due to the aggregation, the conductivity of the molded article may be lowered, a conductivity variance may be exhibited, and impact strength may also be lowered.

The conductive filler may be one selected from the group consisting of a carbon nanotube, a fullerene, graphene, graphite, a carbon fiber, carbon black, and a mixture of two or more thereof, and is preferably a carbon nanotube in consideration of the ease of kneading with the copolymers and conductivity, but the present invention is not limited thereto.

The carbon nanotube is a material for imparting conductivity to a copolymer resin having low inherent conductivity, and the addition thereof to a resin composition can yield a molded product that has improved conductivity and improved antistatic properties due to a decrease in surface resistance.

Specifically, when the carbon nanotube is mixed with a copolymer resin, the individual carbon nanotubes form a continuous three-dimensional network structure in the copolymer resin by being dispersed and interconnected, and as the network structure is formed, the conductive resin composition can exhibit excellent conductivity.

Examples of the method of synthesizing the carbon nanotube include arc-discharge, pyrolysis, laser vaporization, plasma chemical vapor deposition, thermal chemical vapor deposition, and the like, but any type of carbon nanotube may be used regardless of the synthesis method.

In addition, the carbon nanotube may be one selected from the group consisting of single-walled carbon nanotubes, double-walled carbon nanotubes, multi-walled carbon nanotubes (as classified according to the number of walls), cup-stacked carbon nanofiber in which a plurality of truncated conical graphene layers are stacked, and a mixture of two or more thereof, and is preferably a multi-walled carbon nanotube in consideration of the great ease of preparation and excellent economic efficiency thereof, but the present invention is not limited thereto.

The carbon nanotube may have an average outer diameter of 8 nm to 50 nm and an average inner diameter which is at least 40% and preferably 40% to 90% of the average outer diameter. Here, the average outer diameter of the carbon nanotube may be 8 nm or more, 15 nm or more, or 22 nm or more, and 50 nm or less, 43 nm or less, or 36 nm or less. The outer diameter refers to the diameter of a cross-section of the carbon nanotube, which is measured by including the graphite layer constituting the wall of the carbon nanotube, and the inner diameter refers to the diameter of a cross-section of a hollow portion of the carbon nanotube, which is measured by excluding the graphite layer.

When a carbon nanotube having an average single-nanotube outer diameter of less than 8 nm or more than 50 nm is used, the average bundle diameter of a carbon nanotube aggregate formed of the individual carbon nanotubes does not fall in the range to be described below, and therefore, it is preferable to use a carbon nanotube having an outer diameter of 8 nm to 50 nm. As used herein, the term "bundle" refers to a carbon nanotube aggregate in the form of a bundle (i.e., a plurality of the carbon nanotubes are arranged side by side) or a rope (i.e., a plurality of the carbon nanotubes are intertwined). On the other hand, a plurality of carbon nanotubes which have been aggregated without forming a regular structure is referred to as a "non-bundle type."

In addition, the higher the carbon content of the carbon nanotube, the fewer the impurities (e.g., a catalyst) in the carbon nanotube, and therefore, higher conductivity can be realized. The carbon content of the carbon nanotube may be 95% or more, preferably 95% to 98%, and more preferably 95% to 97%.

When the purity of carbon in the carbon nanotube is less than 95%, crystallinity may be lowered because a structural defect is induced in the carbon nanotube, and the carbon nanotube may be easily broken and destroyed by external stimuli.

Meanwhile, a bundle-type carbon nanotube aggregate formed of the above-described individual carbon nanotubes may have an average bundle diameter of 1 µm to 10 µm, preferably 1 µm to 5 µm, and more preferably 2 µm to 4 µm, and an average bundle length of 10 µm to 100 µm, preferably 20 µm to 60 µm, and more preferably 25 µm to 55 µm.

When the carbon nanotube aggregate has an average bundle diameter of less than 1 µm or an average bundle length of more than 100 µm, dispersibility is lowered such that the conductive resin composition may not have uniform conductivity throughout the entire region. On the other hand, when the carbon nanotube aggregate has an average bundle diameter of more than 10 µm or an average bundle length of less than 10 µm, as the network structure becomes unstable, conductivity may be lowered.

The content of the additive is 0 wt% to 10 wt% and preferably 1 wt% to 5 wt% based on the total weight of the conductive resin composition. In this case, the content of the additive may be 0 wt% or more, 0.5 wt% or more, or 1 wt% or more, and 10 wt% or less, 7.5 wt% or less, or 5 wt% or less based on the total weight of the conductive resin composition. Since the additive is not an essential component in the conductive resin composition, when it is described that the content of the additive is 0 wt%, it means that the conductive resin composition does not contain the additive. When the content of the additive is more than 10 wt%, as the relative contents of the first, second, and third copolymers and of other components such as the conductive filler have been decreased, mechanical properties or conductivity may be adversely affected.

The additive may be one selected from the group consisting of a metal salt, stearamide, a silicone oil, and a mixture thereof.

The metal salt may be one selected from the group consisting of calcium stearate, barium stearate, lead stearate, magnesium stearate, zinc stearate, and a mixture of two or more thereof, and is zinc stearate, but the present invention is not limited thereto.

In addition, by improving the fluidity of the composition, the stearamide can minimize the conductivity variance caused by elongation during the molding of the conductive resin composition. When the content of the stearamide is less than 1 wt%, the final product may exhibit an increased conductivity variance according to region. On the other hand, when the content of the stearamide is more than 5 wt%, since the fluidity of the resin composition is excessively increased, mechanical properties may be adversely affected. The stearamide may be used alone or in combination with other materials such as oleamide or erucamide.

When the conductive resin composition is subjected to molding, the silicone oil may work together with the metal salt to realize a molded article having a smooth surface by minimizing the occurrence of the sloughing phenomenon. When the content of the silicone oil is less than 0.5 wt%, the surface properties of the produced molded article may be adversely affected due to the development of unnecessary bumps on the surface. On the other hand, when the content of the silicone oil is more than 5 wt%, conductivity may be lowered.

The silicone oil may have a kinematic viscosity, at 25 °C, of 1 cSt to 10 cSt and preferably 1 cSt to 5 cSt. When the silicone oil has a kinematic viscosity of less than 1 cSt, since the compatibility of the silicone oil in the conductive resin composition is decreased, the reliability and reproducibility of a molded article may be lowered due to an increased mechanical property variance, and when the silicone oil has a kinematic viscosity of more than 10 cSt, flowability is reduced such that there may be a difficulty in adding and blending the raw materials for the preparation of the conductive resin composition, and when extruded, the composition may form an extrudate that easily breaks and thus is unsuitable for practical application. On the other hand, when the silicone oil has a kinematic viscosity that falls in the above-described range, since the silicone oil brings an improvement in the dispersibility of the conductive resin composition, a molded article with improved conductivity and suppressed bump formation on the surface thereof is obtained, and the high electrical conductivity of the conductive resin composition can be maintained even in the process of producing a molded article through a high-ratio drawing process.

The silicone oil may be one selected from the group consisting of a dimethyl silicone oil, a methylhydrogen silicone oil, an ester-modified silicone oil, a hydroxy silicone oil, a carbinol-modified silicone oil, a vinyl silicone oil, a silicone acrylate, and a mixture of two or more thereof, and is preferably a dimethyl silicone oil, but the present invention is not limited thereto.

The second copolymer and the third copolymer may be mixed in a weight ratio of 1 to 2:1 to 2 and preferably 1 to 1.2:1 to 1.2. When the weight ratio between the second and third copolymers is out of the above-described weight ratio range, since the relative contents of the components of the conductive resin composition have become imbalanced, it may be difficult to satisfy the properties required for the molded article.

A ratio of the rubber content of the second copolymer and the rubber content of the third copolymer may be 1:1 to 1.5. When the rubber content of the third copolymer is less than 1 part by weight with respect to 1 part by weight of the rubber content of the second copolymer, the impact resistance of the produced molded article may be adversely affected. On the other hand, when the rubber content of the third copolymer is more than 1.5 parts by weight with respect to 1 part by weight of the rubber content of the second copolymer, the appearance characteristics of the molded article may be adversely affected, and the sloughing phenomenon may occur.

As described above, the first copolymer, the second copolymer, and the third copolymer used in the conductive resin composition have different rubber contents and average rubber particle diameters and serve different functions. However, when mixed and combined as one, they can bring an improvement in both the moldability and mechanical properties of the conductive resin composition. In addition, since the dispersion of the conductive filler during the molding process is promoted, a final product having uniform conductivity throughout the entire region regardless of the shape and structure of the individual regions can be realized, and further, an improvement in the reliability and reproducibility of the product can be achieved. Moreover, when the weight ratio of the second copolymer and the third copolymer is 1:1, since the dispersibility of the conductive filler is maximized, a molded article in which excellent conductivity is exhibited and the development of conductivity variance has been effectively prevented can be obtained.

The conductive resin composition may be used for producing a semiconductor chip tray, but the present invention is not limited thereto.

The molded article produced from the conductive resin composition may have a specific level of conductivity. For example, the molded article may have a surface resistance of 5.0 Ω/sq to 6.0 Q/sq. In addition, the molded article may have an elongation of 60% or more or an impact strength of 10 kg·cm/cm or more (at 23 °C, notched, 3.2 mm). As used herein, the term "impact strength" refers to the impact strength measured in accordance with ASTM D256, and the term "elongation" refers to a value calculated based on the degree of deformation between marks, which is determined by joining specimen pieces together after the fracture of the specimen due to the tensile test, and the unit of elongation is a percentage (%). When the conductive resin composition forms a molded article whose impact strength and elongation are below the above-described ranges, there is a difficulty in forming a sophisticated shape or structure due to the risk of cracking in the molded article, or the produced molded article may exhibit poor durability.

In addition, regardless of the various shapes it can take, the molded article exhibits antistatic properties by having a specific level of conductivity and also has excellent moldability and excellent mechanical strength, and thus can be applied to a semiconductor chip tray and the like.

### Method of preparing conductive resin composition

The method of preparing a conductive resin composition according to another aspect of the present invention may include
(a) preparing a masterbatch by kneading a composition containing a first copolymer and a conductive filler, wherein the first copolymer contains a rubber component having an average particle diameter of 1 µm to 5 µm; and
(b) kneading a composition containing the masterbatch, a second copolymer, and a third copolymer, wherein the second copolymer contains a rubber component having an average particle diameter of 1 µm to 3 µm, and the third copolymer contains a rubber component having an average particle diameter of 5 µm to 7 µm, wherein said first, second and third copolymer is styrene-butadiene copolymers,

wherein the content of the first copolymer is 10 wt% to 35 wt%,
wherein the content of the second copolymer is 20 wt% to 40 wt%, and
wherein the content of the third copolymer is 20 wt% to 40 wt%.

The effects, amounts, and usable types of the first copolymer, the second copolymer, the third copolymer, the conductive filler, and the like have been described above.

That is, for the conductive resin composition, a masterbatch is first prepared by mixing a polymer component and a conductive filler. Then, the conductive resin composition is prepared by adding (an)other polymer component(s) such that it has the above-described mixing ratio. In this case, the amount of the prepared masterbatch may be 10 wt% to 50 wt% and preferably 25 wt% to 40 wt% based on the total weight of the conductive resin composition. In this case, the amount of the masterbatch may be 10 wt% or more, 15 wt% or more, 20 wt% or more, or 25 wt% or more, and 50 wt% or less, 46.7 wt% or less, 43.3 wt% or less, or 40 wt% or less based on the total weight of the conductive resin composition.

The conductive resin composition may basically consist of: a resin having a specific level of mechanical properties and moldability; a conductive filler capable of imparting conductivity to the resin, for example, a metal, miscellaneous inorganic materials; and the like. The conductive resin composition can be prepared by mixing the resin and the conductive filler.

There has been proposed a technique of improving the conductivity of the conventional resin composition by increasing the content of the conductive filler. However, when the content of one type of conductive filler (particularly, carbon nanotubes) is increased beyond a specific level, there is a problem in that not only the mechanical properties of the resin itself are not sufficiently exhibited but also processability, workability, and the like are adversely affected. In order to solve this problem, an attempt has been made to increase the total content of conductive filler in the conductive resin composition by using carbon nanotubes in combination with a material such as carbon black, which may be less capable of imparting conductivity than the carbon nanotubes but has higher processability and workability.

However, the above-described method merely adjusts the types and amount of conductive filler differently and is not different from the conventional method in that the mixing of the conductive filler with the resin is performed as a single process. In this regard, in the step (a), a masterbatch having the required conductive filler content may be prepared by mixing a first copolymer containing a rubber component having an average particle diameter of 1 µm to 5 µm with a conductive filler and extruding the mixture.

As used herein, the term "masterbatch" refers to a dispersion including a large amount of a filler, an additive, and the like used in the preparation of a resin composition, which is prepared in advance. Through the preparation of such a masterbatch, it is possible to improve the dispersibility of the conductive filler in the resin composition and impart uniform conductivity to the entire region of the conductive resin composition.

In this case, the masterbatch may be prepared in the form of spheres, pellets, or the like, but there is no limitation on the form of the masterbatch as long as the masterbatch can be mixed with a second copolymer and a third copolymer in subsequent steps to improve the dispersibility of the conductive filler.

Meanwhile, the step (a) may be carried out at a temperature of 180 °C to 300 °C, preferably 220 °C to 240 °C, and more preferably 230 °C. When the process temperature of the step (a) is less than 180 °C, since the first copolymer is partially melted, the extrusion moldability and dispersibility of the conductive filler may be lowered. On the other hand, when the process temperature of the step (a) is more than 300 °C, the first copolymer may be subjected to random thermal decomposition or denaturation.

In addition, in the step (a), the mixture of the conductive filler and the first copolymer may be extruded at a rate of 10 kg/hr to 500 kg/hr and preferably 10 kg/hr to 30 kg/hr. When the extrusion is carried out at a rate of less than 10 kg/hr, productivity may be lowered. On the other hand, when the extrusion is carried out at a rate of more than 500 kg/hr, uniform mixing of the conductive filler and the first copolymer may not be sufficiently realized.

The masterbatch, which is the product of the step (a), may contain the conductive filler in a predetermined amount. For example, the masterbatch may contain the conductive filler in an amount of 1 wt% to 20 wt% and preferably 5 wt% to 15 wt%.

When the conductive filler is a carbon nanotube, the carbon nanotube may have been obtained by processing powder into pellets by mechanically and physically compressing the same, and may have an apparent density of 0.01 g/ml to 0.2 g/ml and preferably 0.05 g/ml to 0.2 g/ml after the processing. When the apparent density of the carbon nanotube does not fall in the above-described range, it is difficult to prepare a masterbatch which is enriched with carbon nanotubes by containing the carbon nanotube in an amount of 10 wt% or more. In addition, since the carbon nanotube has been processed into pellets, the generation of airborne dust during operations is prevented, and therefore, an improved working environment can be provided.

Meanwhile, the operation performed in the step (a) may be: kneading carried out using a kneader; or extrusion carried out using a single-screw extruder having one screw or a multi-screw extruder having a plurality of screws, a preferable example of which is extrusion carried out using a twin-screw extruder having two screws for the uniform mixing of components and extrusion.

In this case, in order to avoid the risk of damaging the conductive filler by the above-described extruder during the kneading process, it may be preferable to perform melt-kneading by introducing the first copolymer into a twin-screw extruder using a main hopper and feeding the conductive filler to the extruder using a side feeder.

In the step (b), the relative content of the conductive filler in the masterbatch is lowered ("let-down") through mixing with the second and third copolymers. The amount of each of the components to be introduced in the step (b) is sufficient if it is an amount capable of lowering the content of the conductive filler in the prepared conductive resin composition to the level of 0.1 wt% to 10 wt% through dilution.

In the step (b), the mixing of the masterbatch with the second and third copolymers may be carried out by melt-compounding, in-situ polymerization, solution mixing, or the like, and is preferably carried out by melt-compounding. The melt-compounding, which allows the conductive filler to be uniformly dispersed in the resin under high-temperature and high-shear conditions using an extruder or the like, enables mass production and a reduction in production costs. The types, features, and selection criteria of the extruder and the like have been described above.

Unlike a masterbatch prepared by mixing only a conductive filler with a polymer resin, which needs to be further melt-kneaded and extruded in an extruder prior to mixing with a polymer raw material, the above-described conductive resin composition containing a silicone oil having a kinematic viscosity of 1 cSt to 10 cSt at 25 °C can yield a product having a sufficient level of physical properties and conductivity only by simple dilution.

The above-described conductive resin composition prepared through the steps (a) and (b) can exhibit a higher level of balance between conductivity and mechanical properties than a conductive resin composition not prepared by a conventional preparation method (e.g., a masterbatch). In addition, since elongation is improved, the conductive resin composition can be easily molded and processed, and the conductivity variance caused by elongation can be minimized. Therefore, a final product having uniform conductivity throughout the entire region regardless of the shape and structure of the individual regions can be realized, and an improvement in the reliability and reproducibility of the product can be achieved.

Meanwhile, a metal salt and a silicone oil may be further added in the step (a), and stearamide may be further added in the step (b). In this case, the effects, amounts, and usable types of the metal salt, the silicone oil, and the stearamide, and the like have been described above.

Hereinafter, exemplary embodiments of the present invention will be described in more detail.

### Examples and Comparative Examples

A masterbatch was prepared by introducing 9 parts by weight of pelletized multi-walled carbon nanotubes (MWCNTs or CNTs) into the side feeder of a twin-screw extruder, feeding 80 parts by weight of a first styrene-butadiene copolymer (HIPS 1), 8 parts by weight of zinc stearate, and 3 parts by weight of a dimethyl silicone oil having a kinematic viscosity of 5 cSt into the main hopper at a rate of 25 kg/hr, and then performing melt-kneading at 200 rpm and 230 °C.

The masterbatch, a second styrene-butadiene copolymer (HIPS 2), a third styrene-butadiene copolymer (HIPS 3), and stearamide were mixed in a kneader for 10 minutes according to a ratio shown in the following Table 1 and then extruded using a twin-screw extruder, and the resultant was introduced into an injection machine to produce a specimen for measuring properties. In addition, the specifications of the raw materials, HIPS 1, HIPS 2, and HIPS 3, are shown in the following Table 2.

**[Table 1]**

| Classification | CMB | HIPS 2 | HIPS 3 | Additive |
|---|---|---|---|---|
| Example 1 | 30 | 31 | 37 | 2 |
| Example 2 | 30 | 34 | 34 | 2 |
| Example 3 | 30 | 38 | 30 | 2 |
| Example 4 | 37 | 27 | 33 | 3 |
| Example 5 | 37 | 30 | 30 | 3 |
| Example 6 | 37 | 34 | 26 | 3 |
| Comparative Example 1 | 33 | 65 | - | 2 |
| Comparative Example 2 | 31 | - | 67 | 2 |
| Comparative Example 3 | 30 | 17 | 50 | 3 |
| Comparative Example 4 | 30 | 52 | 15 | 3 |
| Comparative Example 5 | 14 | 42 | 42 | 2 |
| Comparative Example 6 | 46 | 25 | 25 | 4 |
| -CMB: Masterbatch | | | | |
| -Additive: Stearamide | | | | |

| | | | | |
|---|---|---|---|---|
| (Units: wt%) | | | | |

**[Table 2]**

| Classification | HIPS 1 | HIPS 2 | HIPS 3 |
|---|---|---|---|
| Main resin | Styrene-butadiene copolymer | Styrene-butadiene copolymer | Styrene-butadiene copolymer |
| Average particle diameter (µm) | 2 to 4 | 1 to 3 | 5 to 7 |
| Rubber (wt%) | 8.3 | 7.2 | 10.2 |
| Weight-average molecular weight (g/mol) | 180,000 | 200,000 | 209,000 |
| Molecular weight distribution index (M_{w}/Mₙ) | 2.3 | 2.3 | 2.4 |
| Tensile strength (kgf/cm², 6 mm) | 240 | 250 | 230 |
| Elongation (%, 6 mm) | 50 | 50 | 70 |
| Impact strength (kg·cm/cm, 3.2 mm) | 9.5 | 9 | 12 |
| Melt index (g/10 min, 200 °C, 5 kg) | 13 | 9 | 4 |
| Flexural strength (kgf/cm², 2.8 mm/min) | 300 | 350 | 310 |

### Experimental Example: Property measurement of conductive resin composition

The mechanical, physical, and electrical properties of each of the sheet-type specimens produced according to the Examples and the Comparative Examples were determined, and the results are shown in the following Table 3. In the results shown below, when the "appearance characteristics" are described as being excellent, it means that the surface was smooth and free of foreign matter such as particles.

**[Table 3]**

| Classification | Impact strength (kg·cm/cm, 3.2 mm) | Elongation (%, 6 mm) | Melt index (g/10 min, 200 °C, 5 kg) | Surface resistance (Ω/sq, log) | Comments |
|---|---|---|---|---|---|
| Example 1 | 10.8 | 64 | 7.4 | 5.8 | |
| Example 2 | 11.2 | 63 | 7.5 | 5.3 | |
| Example 3 | 10.3 | 61 | 7.6 | 5.6 | |
| Example 4 | 10.6 | 64 | 7.6 | 5.4 | |
| Example 5 | 10.9 | 64 | 7.7 | 5.1 | |
| Example 6 | 10.1 | 60 | 7.9 | 5.3 | |
| Comparative Example 1 | 4.5 | 47 | 7.6 | 6.6 | |
| Comparative Example 2 | - | - | - | - | Poorly extruded |
| Comparative Example 3 | 8.3 | 55 | 3.9 | 7.9 | Poor appearance |
| Comparative Example 4 | 6.3 | 51 | 5.3 | 6.3 | |
| Comparative Example 5 | 9.5 | 62 | 5.4 | 9.7 | |
| Comparative Example 6 | 4.3 | 51 | 9.6 | 5.1 | Surging occurred |

Referring to Table 3, the mechanical properties, the melt index, and the surface resistance were more harmoniously realized in Examples 1 to 6 than in Comparative Examples 1 to 6. The specimens according to Examples 1 to 6 had a smooth appearance and did not exhibit the sloughing phenomenon in which the separation of particles or the like leads to the contamination of the surface of the specimens. In addition, it can be seen that the specimens according to Examples 1 to 6 exhibited excellent properties in terms of flexibility, strength, moldability, and a molded-article appearance and thus meet the properties required for producing a semiconductor chip tray. In particular, since both an excellent surface resistance of 5.0 Ω/sq to 6.0 Ω/sq (log) and a high impact strength of 10 kg cm/cm or more were realized, the required level of durability and resistance to contamination by foreign matter was ensured.

Specifically, the composition of Comparative Example 1, in which only HIPS 1 and HIPS 2 were used as the thermoplastic resin, was excellent in appearance characteristics but also poor in elongation and impact strength. On the other hand, the composition of Comparative Example 2, in which only HIPS 1 and HIPS 3 were used, exhibited poor extrudability due to having low fluidity, and thus could not yield a specimen that is uniform in shape.

In the case of Comparative Example 3 and Comparative Example 4, in which the weight ratio of HIPS 2 and HIPS 3 was out of the weight ratio range of 1 to 2:1 to 2, the impact strength was lowered due to a decrease in the dispersibility of the CNTs, and a conductivity variance was exhibited. In addition, the specimen according to Comparative Example 3 had a rough surface, which indicates a poor appearance characteristic.

In the case of Comparative Example 5, in which the relative content of the masterbatch was lowered, the mechanical properties were generally satisfied, except for the surface resistance which was poor. In the case of Comparative Example 6, in which the relative content of the masterbatch was increased, poor processability and poor workability were exhibited due to the occurrence of the surging phenomenon.

As such, when resins differing in terms of fluidity, rubber content, and rubber particle diameter are contained in the conductive resin composition at a specific content ratio, since the issue of a trade-off between impact strength and surface resistance is resolved and, at the same time, an appropriate level of elongation is provided, an improvement in the processability, workability, and reliability of the molded article can be realized.

According to one aspect of the present invention, a conductive resin composition, in which moldability, mechanical strength, and antistatic properties have been harmoniously improved, can be prepared.

However, it is to be understood that the effects of the present invention are not limited to the above-described effects but include all effects deducible from the configuration of the invention described in the detailed description of the invention or in the claims.

## Claims

1. An electrically conductive resin composition comprising:
a first copolymer, which contains a rubber component having an average particle diameter of 1 µm to 5 µm, at 10 wt% to 35 wt%;
a second copolymer, which contains a rubber component having an average particle diameter of 1 µm to 3 µm, at 20 wt% to 40 wt%;
a third copolymer, which contains a rubber component having an average particle diameter of 5 µm to 7 µm, at 20 wt% to 40 wt%;
a conductive filler at 0.1 wt% to 10 wt%; and
an additive at 0 wt% to 10 wt%,
wherein said first, second and third copolymer is styrene-butadiene copolymer.

2. The electrically conductive resin composition of claim 1, wherein the first copolymer, the second copolymer, and the third copolymer are a styrene-butadiene copolymer.

3. The electrically conductive resin composition of claim 1, wherein the conductive filler is one selected from the group consisting of a carbon nanotube, a fullerene, graphene, graphite, a carbon fiber, carbon black, and a mixture of two or more thereof.

4. The electrically conductive resin composition of claim 1, wherein the additive is one selected from the group consisting of a metal salt, stearamide, a silicone oil, and a mixture thereof.

5. The electrically conductive resin composition of claim 4, wherein the metal salt is one selected from the group consisting of calcium stearate, barium stearate, lead stearate, magnesium stearate, zinc stearate, and a mixture of two or more thereof.

6. The electrically conductive resin composition of claim 4, wherein the silicone oil has a kinematic viscosity of 1 cSt to 10 cSt at 25 °C.

7. The electrically conductive resin composition of claim 1, wherein the second copolymer and the third copolymer are mixed in a weight ratio of 1 to 2:1 to 2.

8. The electrically conductive resin composition of claim 1, wherein a ratio of the rubber content of the second copolymer and the rubber content of the third copolymer is 1:1 to 1.5.

9. A method of preparing an electrically conductive resin composition, the method comprising:
(a) preparing a masterbatch by kneading a composition containing a first copolymer and a conductive filler, wherein the first copolymer contains a rubber component having an average particle diameter of 1 µm to 5 µm; and
(b) kneading a composition containing the masterbatch, a second copolymer, and a third copolymer, wherein the second copolymer contains a rubber component having an average particle diameter of 1 µm to 3 µm, and the third copolymer contains a rubber component having an average particle diameter of 5 µm to 7 µm, wherein said first, second and third copolymer is styrene-butadiene copolymers,
wherein the content of the first copolymer is 10 wt% to 35 wt%,
wherein the content of the second copolymer is 20 wt% to 40 wt%,
wherein the content of the third copolymer is 20 wt% to 40 wt%.

10. The method of claim 9, wherein the composition in (a) further contains a metal salt and a silicone oil.

11. The method of claim 9, wherein the composition in (b) further contains stearamide.

## Patentansprüche

1. Elektrisch leitende Harzzusammensetzung, umfassend:
ein erstes Copolymer, das eine Kautschukkomponente, die einen durchschnittlichen Teilchendurchmesser von 1 µm bis 5 µm aufweist, mit 10 Gew.-% bis 35 Gew.-% enthält;
ein zweites Copolymer, das eine Kautschukkomponente, die einen durchschnittlichen Teilchendurchmesser von 1 µm bis 3 µm aufweist, mit 20 Gew.-% bis 40 Gew.-% enthält;
ein drittes Copolymer, das eine Kautschukkomponente, die einen durchschnittlichen Teilchendurchmesser von 5 µm bis 7 µm aufweist, mit 20 Gew.-% bis 40 Gew.-% enthält;
einen leitenden Füllstoff mit 0,1 bis 10 Gew.-%; und
ein Additiv mit 0 bis 10 Gew.-%,
wobei das erste, zweite und dritte Copolymer ein Styrol-Butadien-Copolymer ist.

2. Elektrisch leitende Harzzusammensetzung nach Anspruch 1, wobei das erste Copolymer, das zweite Copolymer und das dritte Copolymer ein Styrol-Butadien-Copolymer sind.

3. Elektrisch leitende Harzzusammensetzung nach Anspruch 1, wobei der leitende Füllstoff einer ist, der aus der Gruppe bestehend aus einem Kohlenstoffnanoröhrchen, einem Fulleren, Graphen, Graphit, einer Kohlenstofffaser, Ruß und einer Mischung aus zwei oder mehreren davon ausgewählt ist.

4. Elektrisch leitende Harzzusammensetzung nach Anspruch 1, wobei das Additiv eines ist, das aus der Gruppe bestehend aus einem Metallsalz, Stearamid, einem Silikonöl und einer Mischung davon ausgewählt ist.

5. Elektrisch leitende Harzzusammensetzung nach Anspruch 4, wobei das Metallsalz eines ist, das aus der Gruppe bestehend aus Calciumstearat, Bariumstearat, Bleistearat, Magnesiumstearat, Zinkstearat und einer Mischung aus zwei oder mehreren davon ausgewählt ist.

6. Elektrisch leitende Harzzusammensetzung nach Anspruch 4, wobei das Silikonöl eine kinematische Viskosität von 1 cSt bis 10 cSt bei 25°C aufweist.

7. Elektrisch leitende Harzzusammensetzung nach Anspruch 1, wobei das zweite Copolymer und das dritte Copolymer in einem Gewichtsverhältnis von 1 bis 2:1 bis 2 gemischt sind.

8. Elektrisch leitende Harzzusammensetzung nach Anspruch 1, wobei ein Verhältnis zwischen dem Kautschukgehalt des zweiten Copolymers und dem Kautschukgehalt des dritten Copolymers 1:1 bis 1,5 beträgt.

9. Verfahren zum Herstellen einer elektrisch leitenden Harzzusammensetzung, wobei das Verfahren umfasst:
(a) Herstellen eines Masterbatch durch Kneten einer Zusammensetzung, die ein erstes Copolymer und einen leitenden Füllstoff enthält, wobei das erste Copolymer eine Kautschukkomponente enthält, die einen durchschnittlichen Teilchendurchmesser von 1 µm bis 5 µm aufweist; und
(b) Kneten einer Zusammensetzung, die das Masterbatch, ein zweites Copolymer und ein drittes Copolymer enthält, wobei das zweite Copolymer eine Kautschukkomponente enthält, die einen durchschnittlichen Teilchendurchmesser von 1 µm bis 3 µm aufweist, und das dritte Copolymer eine Kautschukkomponente enthält, die einen durchschnittlichen Teilchendurchmesser von 5 µm bis 7 µm aufweist, wobei das erste, zweite und dritte Copolymer ein Styrol-Butadien-Copolymer ist,
wobei der Gehalt des ersten Copolymers 10 Gew.-% bis 35 Gew.-% beträgt,
wobei der Gehalt des zweiten Copolymers 20 Gew.-% bis 40 Gew.-% beträgt,
wobei der Gehalt des dritten Copolymers 20 Gew.-% bis 40 Gew.-% beträgt.

10. Verfahren nach Anspruch 9, wobei die Zusammensetzung in (a) ferner ein Metallsalz und ein Silikonöl enthält.

11. Verfahren nach Anspruch 9, wobei die Zusammensetzung in (b) ferner Stearamid enthält.

## Revendications

1. Composition de résine électroconductrice comprenant :
un premier copolymère, qui contient un composant caoutchouc ayant un diamètre particulaire moyen de 1 µm à 5 µm, à 10 % en poids à 35 % en poids ;
un deuxième copolymère, qui contient un composant caoutchouc ayant un diamètre moyen de particule de 1 µm à 3 µm, à 20 % en poids à 40 % en poids ;
un troisième copolymère, qui contient un composant caoutchouc ayant un diamètre moyen de particule de 5 µm à 7 µm, à 20 % en poids à 40 % en poids ;
une charge conductrice à 0,1 % en poids à 10 % en poids ; et
un additif à 0 % en poids à 10 % en poids,
dans laquelle ledit premier, deuxième et troisième copolymère est un copolymère de styrène-butadiène.

2. Composition de résine électroconductrice selon la revendication 1, dans laquelle le premier copolymère, le deuxième copolymère et le troisième copolymère sont un copolymère de styrène-butadiène.

3. Composition de résine électroconductrice selon la revendication 1, dans laquelle la charge conductrice est sélectionnée dans le groupe consistant en un nanotube de carbone, un fullerène, un graphène, un graphite, une fibre de carbone, un noir de carbone, et un mélange de deux ou plus de ceux-ci.

4. Composition de résine électroconductrice selon la revendication 1, dans laquelle l'additif est sélectionné dans le groupe consistant en un sel métallique, un stéaramide, une huile de silicone, et un mélange de ceux-ci .

5. Composition de résine électroconductrice selon la revendication 4, dans laquelle le sel métallique est sélectionné dans le groupe consistant en le stéarate de calcium, le stéarate de baryum, le stéarate de plomb, le stéarate de magnésium, le stéarate de zinc, et un mélange de deux ou plus de ceux-ci.

6. Composition de résine électroconductrice selon la revendication 4, dans laquelle l'huile de silicone présente une viscosité cinématique de 1 cSt à 10 cSt à 25 °C.

7. Composition de résine électroconductrice selon la revendication 1, dans laquelle le deuxième copolymère et le troisième copolymère sont mélangés dans un rapport en poids de 1 à 2 : 1 à 2.

8. Composition de résine électroconductrice selon la revendication 1, dans laquelle un rapport de la teneur en caoutchouc du deuxième copolymère et de la teneur en caoutchouc du troisième copolymère est de 1 : 1 à 1,5.

9. Procédé de préparation d'une composition de résine électroconductrice, le procédé comprenant :
(a) la préparation d'un mélange maître en malaxant une composition contenant un premier copolymère et une charge conductrice, dans lequel le premier copolymère contient un composant caoutchouc ayant un diamètre particulaire moyen de 1 µm à 5 µm ; et
(b) le malaxage d'une composition contenant le mélange maître, un deuxième copolymère, et un troisième copolymère, dans lequel le deuxième copolymère contient un composant caoutchouc ayant un diamètre moyen de particule de 1 µm à 3 µm, et le troisième copolymère contient un composant caoutchouc ayant un diamètre moyen de particule de 5 µm à 7 µm, dans lequel lesdits premier, deuxième et troisième copolymères sont des copolymères de styrène-butadiène,
dans lequel la teneur du premier copolymère est de 10 % en poids à 35 % en poids,
dans lequel la teneur du deuxième copolymère est de 20 % en poids à 40 % en poids,
dans lequel la teneur du troisième copolymère est de 20 % en poids à 40 % en poids.

10. Procédé selon la revendication 9, dans lequel la composition en (a) contient en outre un sel métallique et une huile de silicone.

11. Procédé selon la revendication 9, dans lequel la composition en (b) contient en outre un stéaramide.
